# EUROPEAN PATENT APPLICATION

(11) **EP 4 764 423 A1**
(43) Date of publication of application: **24.06.2026**
(21) Application number: 24222813.8
(22) Date of filing: 23.12.2024
(51) Int. Cl.: G01D 21/00, G01D 21/02

(54) **A SENSOR APPARATUS**

(71) Applicant: Helvar Oy Ab, 02150 Espoo (FI)
(72) Inventor: JUSLÉN, Henri, 02150 Espoo (FI); AHOLA, Jukka, 02150 Espoo (FI)
(74) Representative: Berggren Oy

(57) **Abstract**

According to an embodiment, a sensor apparatus (110-k) for monitoring a predefined first environmental characteristics in a location of a space is provided, the sensor apparatus (110-k) comprising: a communication portion (111-k) for wired and/or wireless communication with one or more other apparatuses; a sensing element (112-k) arranged to generate an electrical measurement signal that is descriptive of the first environmental characteristic; a control portion (113-k) arranged to derive, based on the electrical measurement signal, local sensor indications that are descriptive of the first environmental characteristic and operate the communication portion (111-k) to transmit the local sensor indications to the one or more other apparatuses; and a supervising portion (114-k) arranged to respond to an occurrence of a predefined condition that is associated with compromised operation of the sensor apparatus (110-k) by carrying out at least one of the following: adjust at least one aspect of operation of the control portion (113-k) in relation the deriving and/or transmitting the local sensor indications, or operate the communication portion (111-k) to transmit, to one or more other sensor apparatuses operating in said space, a substitute request that pertains to deriving, at a respective other sensor apparatus on behalf of the sensor apparatus (110-k), substitute sensor indications that are descriptive of the first environmental characteristic to replace at least part of the local sensor indications.

## Description

### TECHNICAL FIELD

The present invention relates to a sensor apparatus provided for observing a predefined environmental characteristic.

### BACKGROUND

Many lighting systems applied for illuminating an indoor space or area or an outdoor area at least partially rely on autonomous control of light output of luminaries of the lighting system, where the autonomous control is based on environmental characteristics determined via application of sensor devices operating in the illuminated space or area. Typical, but non-limiting, examples of sensors applicable for capturing sensor data that is applicable for controlling at least some aspect of the light output include an occupancy sensor and a light sensor: while an occupancy sensor may be applied to switch on (and keep on) lights in response to detecting occupancy in the space and to switch off (and keep off) lights in response to detecting non-occupancy in the space, a light sensor may be applied to control the light output in view of the ambient light level in the space such that a desired overall illumination level is provided. Hence, sensor data enables at least partially autonomous lighting control that ensures user comfort while minimizing energy consumption.

The sensors applied for lighting control may be arranged as respective sensor devices that are provided as respective nodes of a lighting control network and that transmit the sensor data captured therein over the lighting control network to other nodes of the lighting control network. The nodes of the lighting control network that make use of the sensor data received from the sensor devices include luminaires having a lighting control functionality integrated therein and/or control entities arranged to implement a lighting control functionality for controlling one or more luminaires. In this regard, each luminaire knows which ones of the sensor devices supply sensor data that is applicable for controlling the light output of the respective luminaire and/or each control entity knows, for a plurality of luminaires it serves to control, which ones of the sensor devices supply sensor data that is applicable for controlling the respective light outputs of the plurality of luminaires. This mapping between the sensor devices and the associated luminaires may be defined as part of the lighting control network commissioning carried out upon installing, configuring or reconfiguring the lighting system at the site of its operation. Moreover, the sensor data captured in the lighting control network is typically also applicable for purposes other than lighting control, e.g. for facilitating building management functions and/or just for collecting data on environmental conditions in the space or area illuminated by the lighting system.

The sensor device may comprise a sensing element for converting an environmental characteristic into an electrical measurement signal, a control logic for processing data captured by the sensing element into a format suitable for transmission to the other nodes of the lighting control network and a communication means for communicating with other nodes of the lighting control network.

Large lighting control networks may consist of hundreds or even thousands of nodes, potentially including a large number of sensor devices. Over a prolonged operation of the lighting system, some of the sensor devices may enter operational states that result in compromised, erroneous or at least unexpected operation of the respective sensor devices and/or the sensor device may be relocated (intentionally or unintentionally), which both are events that typically result in adverse effects in overall operation of the lighting system in terms of user comfort and energy consumption if not accounted for. While any problems and/or changes in operation of the sensor devices are eventually addressed via maintenance operations following detection of their compromised operation, in many cases an automated reaction to an issue that is likely to compromise operation of a sensor device as part of the lighting control network would be highly desirable to compensate or mitigate any adverse effects it may have to user comfort and/or energy consumption of the lighting system.

### SUMMARY

It is an object of the present invention to provide a technique for mitigating effects arising from compromised operation of a sensor apparatus.

According to an embodiment, a first sensor apparatus for monitoring a predefined first environmental characteristics in a location of a space is provided, the first sensor apparatus comprising: a communication portion for wired and/or wireless communication with one or more other apparatuses; a sensing element arranged to generate an electrical measurement signal that is descriptive of the first environmental characteristic; a control portion arranged to derive, based on the electrical measurement signal, local sensor indications that are descriptive of the first environmental characteristic and operate the communication portion to transmit the local sensor indications to the one or more other apparatuses; and a supervising portion arranged to respond to an occurrence of a predefined condition that is associated with compromised operation of the sensor apparatus by carrying out at least one of the following: adjust at least one aspect of operation of the control portion in relation the deriving and/or transmitting the local sensor indications, or operate the communication portion to transmit, to one or more other sensor apparatuses operating in said space, a substitute request that pertains to deriving, at a respective other sensor apparatus on behalf of the sensor apparatus, substitute sensor indications that are descriptive of the first environmental characteristic to replace at least part of the local sensor indications.

According to another embodiment, a second sensor apparatus for monitoring a predefined first environmental characteristics in a location of a space is provided, the second sensor apparatus comprising: a communication portion for wired and/or wireless communication with one or more other apparatuses; a sensing element arranged to generate an electrical measurement signal that is descriptive of the first environmental characteristic; a control portion arranged to derive, based on the measurement signal, local sensor indications that are descriptive of the first environmental characteristic and operate the communication portion to transmit the local sensor indications to the one or more other apparatuses; and a support portion arranged to: receive, from another sensor apparatus operating in said space, a substitute request that pertains to deriving substitute sensor indications based on the local sensor indications to replace at least part of remote sensor indications to be derived in said another sensor apparatus, derive said substitute sensor indications based on the local sensor indications in accordance with the substitute request, and operate the communication portion to transmit said substitute sensor indications to the one or more other apparatuses.

According to another embodiment, a first method for monitoring a predefined first environmental characteristics in a location of a space is provided, the first method comprising: receiving, from a sensing element of the sensor apparatus, an electrical measurement signal that is descriptive of the first environmental characteristic; deriving, based on the electrical measurement signal, local sensor indications that are descriptive of the first environmental characteristic and transmitting the local sensor indications to one or more other apparatuses; and carrying out at least one of the following in response to an occurrence of a predefined condition that is associated with compromised operation of the sensor apparatus: adjusting at least one aspect of deriving and/or transmitting the local sensor indications, or transmitting, to one or more other sensor apparatuses operating in said space, a substitute request that pertains to deriving, at a respective other sensor apparatus on behalf of the sensor apparatus, substitute sensor indications that are descriptive of the first environmental characteristic to replace at least part of the local sensor indications.

According to another embodiment, a second method for monitoring a predefined first environmental characteristics in a location of a space is provided, the second method comprising: receiving, from a sensing element of the sensor apparatus, an electrical measurement signal that is descriptive of the first environmental characteristic; deriving, based on the electrical measurement signal, local sensor indications that are descriptive of the first environmental characteristic and transmit the local sensor indications to one or more other apparatuses; and receiving, from another sensor apparatus operating in said space, a substitute request that pertains to deriving substitute sensor indications based on the local sensor indications to replace at least part of remote sensor indications to be derived in said another sensor apparatus and carrying out the following in response to receiving said substitute request: deriving said substitute sensor indications based on the local sensor indications in accordance with the substitute request, and transmitting said substitute sensor indications to the one or more other apparatuses.

The exemplifying embodiments of the invention and variations thereof presented in this patent application are not to be interpreted to pose limitations to the applicability of the appended claims. Moreover, the verb "to comprise" and its derivatives are used in the present disclosure to indicate an open limitation that does not exclude the existence of also unrecited features.

Some features of the invention are set forth in the appended claims. Aspects of the invention, however, both as to its construction and its method of operation, together with additional objects and advantages thereof, will be best understood from the following description of example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a block diagram of some components of a lighting system according to an example;
Figure 1B illustrates a block diagram of some components of a lighting system according to an example;
Figure 2 illustrates a block diagram of some components of a sensor apparatus according to an example;
Figure 3A illustrates a method according to an example;
Figure 3B illustrates a method according to an example; and
Figure 4 illustrates a block diagram of some components of an apparatus according to an example.

### DESCRIPTION OF SOME EMBODIMENTS

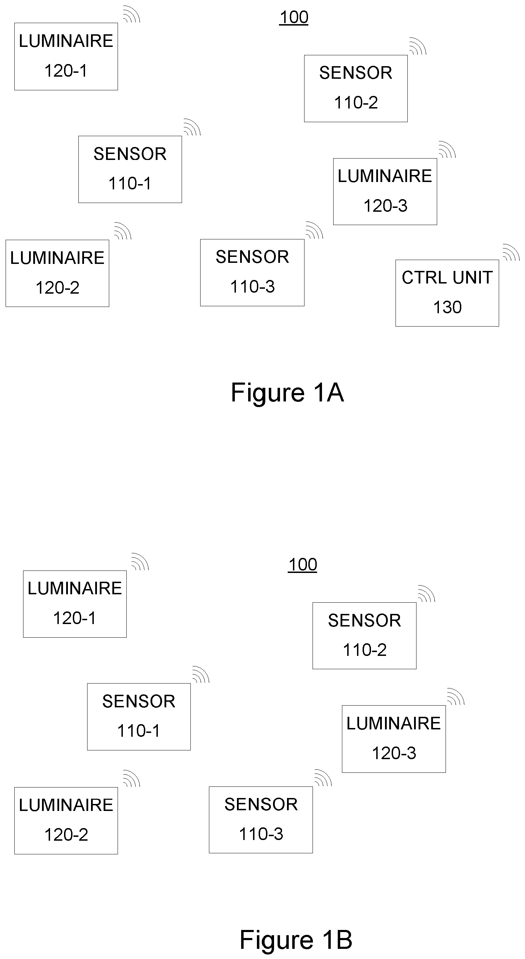

Figure 1A illustrates a block diagram of some elements of a lighting system 100 according to an example. In this example, the lighting system 100 is shown with sensor apparatuses 110-1, 110-2, 112-3, with luminaires 120-1, 120-2, 120-3 and with a lighting control unit 130. The lighting system 100 is applicable for illuminating one or more spaces or areas, e.g. one or more indoor spaces and/or one or more outdoor areas. Herein, the sensor apparatuses 110-1, 110-2, 110-3 represent a plurality of sensor apparatuses that may be collectively referred to via a reference number 110, whereas any individual sensor apparatus may be referred to via a reference number 110-k. Along similar lines, the luminaires 120-1, 120-2, 120-3 represent a plurality of luminaires that may be collectively referred to via a reference number 120, whereas any individual sensor apparatus may be referred to via a reference number 120-j.

The sensor apparatuses 110-k, the luminaires 120-j and the lighting control unit 130 are communicatively coupled to each other via a lighting control network, which in the example of Figure 1A is illustrated as a wireless communication network, whereas in other examples the lighting control network may be implemented as a wired communication network. Each of the sensor apparatuses 110-k, each of the luminaires 120-j and the lighting control unit 130 may be considered to constitute a respective node of the lighting control network.

As a high-level description of operation of the lighting system 100 according to the example of Figure 1A, the sensor apparatuses 110-k capture respective sensor data in their respective locations and transmit the sensor data over the lighting control network to other nodes of the lighting control network. While the sensor data may be received at each of the (other) nodes of the lighting control network, in this example the sensor data is primarily transmitted to the lighting control unit 130. The lighting control unit 130 has predefined sensor mapping data that defines operational relationships between the sensor apparatuses 110-k and the luminaires 120-j to facilitate lighting control of the luminaries 120-j based on the sensor data received from the sensor apparatuses 110-k. In particular, the sensor mapping data may define, for each of the plurality of luminaires 120, those ones of the plurality of sensor apparatuses 110 that provide sensor data applicable for controlling light output of the respective luminaire 120-j and/or the sensor mapping data may define, for each of the plurality of sensor apparatuses 110, those ones of the plurality of luminaries 110 for which the sensor data originating from the respective sensor apparatus 110-k is applicable. Consequently, control unit 130 derives respective lighting control commands for controlling respective light outputs from the plurality of luminaries 120 based on the respective sensor data received from the plurality of sensor apparatuses 110 in accordance with the sensor mapping data and transmits the derived lighting control commands over the lighting control network to the respective luminaires 120-j, where each luminaire 120-j controls its respective light output at least partially based on the lighting control commands addressed thereto.

Figure 1B illustrates a block diagram of some elements of a lighting system 100 according to another example. In this example, the lighting system 100 is shown with the plurality of sensor apparatuses 110 and the plurality of luminaires 120 that are communicatively coupled to each other via the lighting control network that may be provided as a wireless or wired communication network, whereas a difference to the example of Figure 1A is omission of the lighting control unit 130.

As a high-level description of operation of the lighting system 100 according to the example of Figure 1B, the sensor apparatuses 110-k capture respective sensor data in their respective locations and transmit the sensor data over the lighting control network to other nodes of the lighting control network. While the sensor data may be received at each of the (other) nodes of the lighting control network, in this example the sensor data originating from a certain sensor apparatus 110-k is primarily targeted for respective one or more luminaires 120-j that are arranged to control their respective light outputs at least partially based on the sensor data originating from the respective sensor apparatus 110-k. In this regard, each luminaire 120-k may have respective predefined sensor mapping data that defines those ones of the plurality of sensor apparatuses 110 that provide sensor data applicable for controlling light output of the respective luminaire 120-j. Consequently, each luminaire 120-j locally derives and applies respective lighting control commands based on the applicable sensor data and controls its light output accordingly.

Each luminaire 120-j of the lighting system 100 comprises a communication portion for communicating with other elements of the lighting control network, one or more lights sources for providing illumination, and a luminaire control portion for controlling light output from the one or more light sources. The luminaire control portion in the luminaire 120-j may control the light output at least partially based on lighting control commands received via the communication portion from the lighting control unit (cf. the example of Figure 1A) or the luminaire control portion may control the light output based on the respective sensor data received from certain one(s) of the plurality of sensor apparatuses (cf. the example of Figure 1B), depending on the design of the lighting system 100.

In the course of its operation, the luminaire 120-j may transmit luminaire status indication messages over the lighting control network to other nodes of the lighting control network. The luminaire status indication messages transmitted from the luminaire 120-j may indicate respective lighting control actions taken at the luminaire 120-j. Non-limiting examples in this regard include a luminaire status message that indicates the luminaire 120-j switching on its light output, a luminaire status message that indicates the luminaire 120-j switching off its light output, a luminaire status message that indicates luminaire 120-j adopting a certain light intensity level (e.g. as a percentage of the nominal or maximum light intensity of the luminaire 120-j), a luminaire status message that indicates the luminaire 120-j initiating dimming down its light intensity level according to a dimming curve to a (predefined) standby light intensity), etc. The luminaire status indication messages transmitted from the luminaire 120-j provide the other nodes of the lighting control network with information about operation of the luminaire 120-k, which may serve as additional information for controlling operation of the respective node of the lighting control network.

The examples provided with references to Figures 1A and 1B assume that the plurality of sensor apparatuses 110 are provided as part of the lighting system 100 and they are communicatively coupled to each other via the lighting control network. This is, however, a non-limiting example and the plurality of sensor apparatuses 110 may be provided as a sensor network in a framework of a system different from the lighting system 100 or as a stand-alone sensor network that is independent of other systems. Therefore, the plurality of sensors 110 and other components that are communicatively coupled thereto may be also referred to as a sensor system and the network that couples the sensors apparatuses 110-k to each other may be also referred to as a sensor network. Nevertheless, the examples provided in the foregoing and in the following refer to the lighting system 100 and the lighting control network provided in the framework of the lighting system 100, whereas these examples readily generalize into the sensor system and to the sensor network provided in the framework of the sensor system, *mutatis mutandis.*

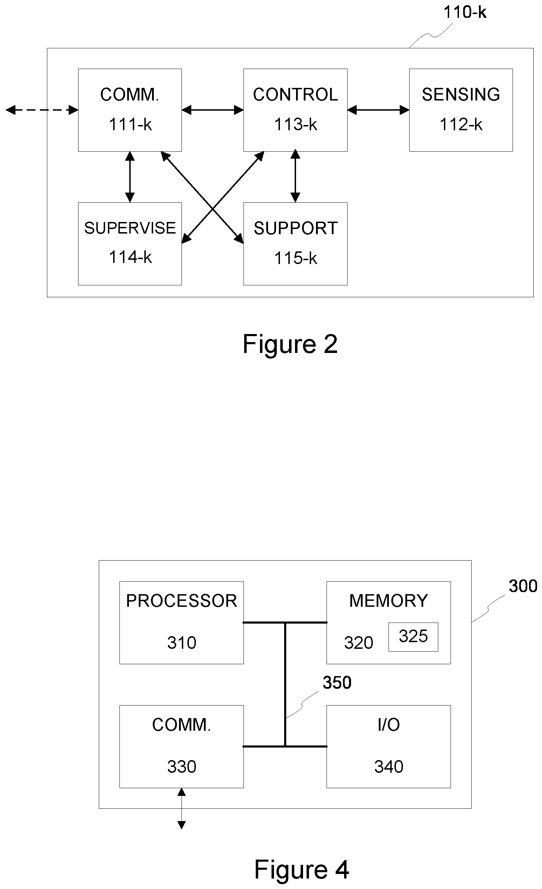

Figure 2 illustrates a block diagram of some elements of the sensor apparatus 110-k according to an example. The sensor apparatus 110-k comprises a communication portion 111-k, a sensing element 112-k, and a control portion 113-k. Moreover, the sensor apparatus further comprises a supervising portion 114-k and/or a support portion 115-k. Each of these elements of the sensor apparatus 110-k is described in further detail in the following. In various examples, the sensor apparatus 110-k is a stand-alone device that is applicable for capturing sensor data and transmitting the captured sensor data to other devices, e.g. to the lighting control unit 130 and/or to the plurality of luminaires 120 via a communicative coupling such as the lighting control network described in the foregoing. In other words, the sensor apparatus 110-k may be provided as an entity that is independent and physically separate from those devices that make use of the sensor data captured therein. The sensor apparatus 110-k is nevertheless provided with the (embedded) control portion 113-k that is arranged to convert an electrical measurement signal generated by the sensing element 112-k into sensor indications for transmission via operation of the communication portion 111-k to other nodes of the lighting control network.

In an example, the sensor apparatus 110-k receives operating power from an external power source (e.g. from mains electricity), whereas in another example the sensor apparatus 110-k receives the operating power from a power supply provided therein. In the latter example, the power supply may include e.g. a replaceable battery or a rechargeable battery.

The communication portion 111-k enables wireless and/or wired communication with one or more other apparatuses. In this regard, in the framework of the lighting system 100, this may involve communication with the other nodes of the lighting control network, e.g. the other ones of the plurality of sensor apparatuses 110, the plurality of luminaires 120 and the lighting control unit 130 (if included in the lighting system 100). The communication with the other nodes of the lighting control network involves both transmitting messages to and receiving messages from the other nodes of the lighting control network.

Along the lined described in the foregoing, the communication portion 111-k enables communication with the other nodes of the lighting control network using wired or wireless communication means. In case the lighting control network is provided as a wired communication network or as a wired bus, the communication between the sensor apparatus 110-k and the other nodes of the lighting control network may be carried out in accordance with a predefined lighting control protocol, such as the Digital Addressable Lighting Interface (DALI) specified in a series of technical standards IEC 62386. In some (other) examples the wired communication network may involve Power over Ethernet (PoE) or a packet switched communication network such as an Internet Protocol (IP) based network. In case the lighting control network is provided as a wireless communication network, a wireless short-range communication network known in the art may be employed. Non-limiting examples of suitable wireless communication techniques for implementing the lighting control network as a wireless communication network include Bluetooth, Bluetooth Low-Energy (BLE), ZigBee, WLAN/Wi-Fi according to an IEEE 802.11 family of standards. In a particular example of making use of a wireless communication technique, the lighting control network may be provided as a wireless mesh network, e.g. one according to the Bluetooth or Bluetooth LE Mesh networking protocol.

The sensing element 112-k is arranged to generate the electrical measurement signal that is descriptive of a predefined environmental characteristic. In the following, the environmental characteristic monitored by the sensing element 112-k is referred to as a first environmental characteristic. Herein, the specifier 'first' does not imply any order or priority, but it only serves as a specifier that distinguishes the environmental characteristic monitored by the sensing element 112-k of the sensor apparatus 110-k from respective environmental characteristics monitored by other ones of the plurality of sensor apparatuses 110.

When arranged to operate as part of the lighting system 100, the sensor apparatus 110-k is arranged to monitor the first environmental characteristic at a respective location of the one or more spaces or areas the lighting system 100 serves to illuminate via operation of the sensing element 112-k therein. In this regard, the sensor apparatus 110-k may operate as one of the following sensor types:
- a motion sensor for monitoring occupancy at the location monitored by the sensor apparatus 110-k, e.g. a passive infrared (PIR) sensor, a microwave radar, a lidar, a video camera, a thermal camera, etc.;
- a light sensor for measuring ambient light level at the location monitored by the sensor apparatus 110-k, e.g. photodetector such as photodiode;
- a temperature sensor for measuring ambient temperature at the location monitored by the sensor apparatus 110-k;
- a humidity sensor for measuring air humidity at the location monitored by the sensor apparatus 110-k;
- a pressure sensor for measuring air pressure at the location monitored by the sensor apparatus 110-k;
- a sound sensor (e.g. a microphone or a microphone array) for capturing sounds at the location monitored by the sensor apparatus 110-k;
- a carbon dioxide (CO₂) sensor for measuring concentration of CO₂ at the location monitored by the sensor apparatus 110-k;
- a volatile organic compound (VOC) sensor for measuring total concentration of VOCs (tVOC) at the location monitored by the sensor apparatus 110-k.

Further examples off applicable sensor types include a door sensor arranged to monitor a door position (e.g. in a range from closed to open), a 'seat sensor' arranged to monitor whether a seat under consideration is occupied or unoccupied, an accelerometer arranged to monitor movement of an object to which it is installed etc. In the framework of the present disclosure, also aspects monitored by such specific sensor types may be considered to constitute respective environmental characteristics of the one or more spaces or areas illuminated by the lighting system 100. Hence, depending on the sensor type, the electrical measurement signal produced by the sensing element 112-k may be descriptive of e.g. one of the following environmental characteristics: motion or occupancy in the space, light level, temperature, humidity, pressure, sounds, CO₂ level, tVOC concentration, door position, occupancy of a seat, movement of an object, etc.

The control portion 113-k is arranged to derive, based on the electrical measurement signal received from the sensing element 112-k, local sensor indications that are descriptive of the first environmental characteristic. Herein, the sensor indications are designed as `local' due to being derived locally at the sensor apparatus 110-k based on the respective electrical measurement signal generated by the sensing element 112-k of the same sensor apparatus 110-k for transmission to other apparatuses of the lighting control network. Conversely, in a viewpoint of the sensor apparatus 110-k, sensor indications derived at and possibly received from other ones of the plurality of sensor apparatuses 110 may be considered as respective remote sensor indications.

In an example, the control portion 113-k derives the local sensor indications based on the electrical measurement signal supplied by the sensing portion 112-k and transmits the derived local sensor indications to the other nodes of the lighting control network according to a predefined schedule, e.g. at predefined time intervals. In another example, the control portion 113-k monitors the electrical signal supplied by the sensing portion 112-k according to a predefined schedule (e.g. at predefined time intervals) and transmits the derived local sensor indications to the other nodes of the lighting control network according to one or more predefined rules. In this regard, the predefined rule(s) may define e.g. that the derived local sensor indication is transmitted to the other nodes of the lighting control network in response to detecting that the electrical measurement signal indicates a change of predefined kind in relation to the most recently transmitted previous local sensor indication, where the change may involve any change in relation to the most recently transmitted previous local sensor indication (e.g. a change from occupancy to non-occupancy or vice versa) or a change whose absolute value in relation to the most recently transmitted previous local sensor indication exceeds a predefined threshold (e.g. a threshold-exceeding change in observed light level).

Along the lines described in the foregoing, the local sensor indications derived via operation of the control portion 113-k are transmitted from the sensor apparatus 110-k for reception at (all) other nodes of the lighting control network, whereas they may be primarily transmitted to the lighting control unit 130 (cf. the example of Figure 1A) or to those ones of the plurality of luminaires 120 that apply the sensor data originating from the sensor apparatus 110-k for lighting control therein (cf. the example of Figure 1B). While direct usage of the sensor indications derived at the sensor apparatus 110-k for lighting control at the lighting control unit 130 or at the luminaires 120-j (depending on the lighting system design) upon their reception or shortly thereafter may be considered as their primary purpose, the sensor indications derived at and/or received from the sensor apparatus 110-k over time constitute a respective time series of sensor indications, which may be also stored at the sensor apparatus 110-k, at another node of the lighting control network and/or at an entity (such as a server apparatus or a cloud computing service) coupled to the lighting control network for subsequent use. In this regard, the past values of the sensor indications included in the time series may be referred to as history of sensor indications or as history data. The history data may be applied at the sensor apparatus 110-k or at another node of the lighting control network, for example, for a long(er)-term analysis of variations in the first environmental characteristic, for observing any anomalies or suspected changes in operation of the sensor apparatus 110-k and/or for tracking changes in the first environmental characteristic over a time period in relation to changes in a respective environmental characteristic monitored by another one of the plurality of sensor apparatuses 110.

In an example, the control portion 113-k is implemented by a program code stored in a memory provided in the sensor apparatus 110-k and executed by a processor provided in the sensor apparatus 110-k, whereas in another example the control portion 113-k is implemented by a dedicated electric circuit, e.g. as a field-programmable gate array (FPGA) or as an application specific circuit (ASIC) provided as part of the sensor apparatus 110-k. In various examples, the control portion 113-k may be considered as an embedded computer having a relatively low processing power that is sufficient for deriving the local sensor indications and operating the control portion 111-k to transmit the derived local sensor indications over the lighting control network to the other nodes.

The supervising portion 114-k is arranged to respond to an occurrence of one of one or more predefined conditions, where each of the one or more conditions is associated with a respective aspect of compromised operation of the sensor apparatus 110-k. Due to its role in monitoring operation of the sensor apparatus 110-k, the supervising portion 114-k may be also referred to as a sensor monitoring portion 114-k. In this regard, the supervising portion 114-k is arranged to respond to detecting an occurrence of a given one of the one or more predefined conditions by carrying out one or more predefined actions associated with the respective condition. The one or more predefined conditions considered by the supervising portion 114-k may pertain, for example, to one or more of the following: an operational status of the sensor apparatus 110-k in its entirety, an operational status of a component of the sensor apparatus 110-k, an environmental condition detected via the local sensor indications derived at the sensor apparatus 110-k, a respective environmental condition detected at the sensor apparatus 110-k based on remote sensor indications received from one or more other ones of the plurality of sensor apparatuses 110.

Concrete but non-limiting examples of such conditions associated with an aspect of compromised operation of the sensor apparatus 110-k include the following:
- a limited supply of operating power to the sensor apparatus 110-k,
- a detected or suspected malfunction of the sensing element 112-k,
- an environmental condition that is considered to result in compromised operation of the sensing element 112-k,
- a detected or suspected change of position of the sensor apparatus 110-k.

In various examples, the respective one or more predefined actions resulting from detecting an occurrence of one of the one or more predefined conditions include one or more of the following:
- adjusting at least one aspect of operation of the control portion 113-k with respect to deriving the local sensor indications and/or with respect to transmitting the derived local sensor indications from the sensor apparatus 110-k to the other nodes of the lighting control network;
- operating the communication portion 111-k to transmit, to one or more other sensor apparatuses operating in the one or more spaces or areas illuminated by the lighting system 100, a substitute request that pertains to deriving, at a respective other sensor apparatus on behalf of the sensor apparatus 110-k, substitute sensor indications that are descriptive of the first environmental characteristic, where the substitute sensor indications serve to replace at least part of the local sensor indications to be derived by the sensor apparatus 110-k.

Referring to the above example of adjusting the at least one aspect of operation of the control portion 113-k, in various examples such adjustment may comprise one of the following:
- adjusting the schedule of the control portion 113-k deriving the local sensor indications at the local sensor apparatus 110-k,
- adjusting the schedule of transmitting the local sensor indications from the sensor apparatus 110-k,
- adjusting or changing a manner of deriving the local sensor indications in the control portion 113-k, and
- disabling derivation and/or transmission of the local sensor indications from the sensor apparatus 110-k.

Referring to the above example of operating the communication portion 111-k to transmit the substitute request, in various examples the substitute request may comprise a request to derive the substitute sensor indications to replace (only) some of the local sensor indications or a request to derive the substitute sensor indications to replace all local sensor indications.

In an example, the substitute request transmitted from the sensor apparatus 110-k may be addressed to a particular other sensor apparatus. In other examples, the substitute request may be addressed to a particular subset of other sensor apparatuses 110-k or to any other sensor apparatus whose sensing element serves to observe a certain environmental characteristic (i.e. to any sensor apparatus representing a certain sensor type). Throughout the present disclosure, the sensor apparatus 110-k that has transmitted the substitute request may be referred to as a requesting sensor apparatus, whereas another sensor apparatus serving as an addressee of the substitute request may be referred to as a respective supporting sensor apparatus. Moreover, since operation of a supporting sensor apparatus is substantially similar regardless of the respective supporting sensor apparatus being the sole addressee of the substitute request or one of a plurality of addressees of the substitute request, the following examples predominantly refer to the supporting sensor apparatus in singular. However, these examples readily generalize into scenarios where the substitute request is addressed to one or more other sensor apparatuses that may serve as the supporting sensor apparatus for the requesting sensor apparatus.

In an example, the substitute request is addressed to a supporting sensor apparatus that is arranged to derive respective remote sensor indications that are directly descriptive of the first environmental characteristic. This may allow directly using the respective remote sensor indications as the substitute sensor indications, even though they are typically derived for a location of the one or more spaces or areas different from that of the requesting sensor apparatus 110-k. In another example, the substitute request is addressed to a supporting sensor apparatus that is arranged to derive respective remote sensor indications that are indirectly descriptive of the first environmental characteristic. This may allow derivation or estimation of the substitute sensor indications from the respective remote sensor indications via knowledge of a relationship between the local sensor indications derived at the requesting sensor apparatus 110-k and the remote sensor indications derived at the supporting sensor apparatus. In a further example, the substitute request is addressed to a supporting sensor apparatus that is arranged to derive respective remote sensor indications that are directly descriptive of the first environmental characteristic, but where the supporting sensor apparatus uses sensing technology (i.e. a sensing portion) different from that applied by the requesting sensor apparatus 110-k for generating the electrical measurement signal serving as the basis for derivation of the (remote) sensor indications therein. An example in this regard involves using a first sensing technology (e.g. PIR) for occupancy detection in the requesting sensor apparatus 110-k and using a second sensing technology (e.g. a camera) in the supporting sensor apparatus.

The substitute request includes an identification of the requesting sensor apparatus 110-k to identify the origin of the substitute request, whereas the substitute request may further comprise information that identifies those local sensor indications of the requesting sensor apparatus 110-k that are to be replaced by the substitute sensor indications derived at the supporting sensor apparatus. The substitute request may also expressly identify the first environmental characteristic monitored by the sensing element 112-k of the requesting sensor apparatus 110-k or this information may be derivable from the identification of the requesting sensor apparatus 110-k conveyed in the substitute request. According to an example, the substitute request also includes respective identifications of the one or more addressees of the substitute request, whereas in another example the one or more addressees are not expressly indicated in the substitute request but the other sensor apparatuses have a priori knowledge of the identification of the sensor apparatus 110-k for which they may be requested to serve as a supporting sensor apparatus and they identify substitute requests addressed thereto based on the identification of the requesting sensor apparatus 110-k conveyed in the substitute requests.

In an example, the supervising portion 114-k is implemented by a program code stored in a memory provided in the sensor apparatus 110-k and executed by a processor provided in the sensor apparatus 110-k, whereas in another example the supervising portion 114-k is implemented by a dedicated electric circuit, e.g. as a FPGA or as an ASIC provided as part of the sensor apparatus 110-k. In various examples, the supervising portion 114-k may be considered as an embedded computer having a relatively low processing power that is sufficient for monitoring occurrences of the one or more predefined conditions and carrying out the predefined action(s) associated therewith. In an example, the supervising portion 114-k is implemented separately from the control portion 113-k, whereas in another example the program code stored in the memory and executed by the processor or the dedicated electric circuit may provide both the supervising portion 114-k and the control portion 113-k.

The support portion 115-k is responsive to the substitute request received from another sensor apparatus of the lighting system 100. In particular, the support portion 115-k is arranged to receive the substitute request from a requesting sensor apparatus, where the substitute request serves as a request for the sensor apparatus 110-k to derive substitute sensor indications based on the local sensor indications derived therein to replace at least part of remote sensor indications to be derived at the requesting sensor apparatus. Moreover, the support portion 115-k is also arranged to derive the substitute sensor indications in accordance with the received substitute request and operate the communication portion 111-k to transmit the derived substitute sensor indications to the one or more apparatuses.

In an example, the support portion 115-k is implemented by a program code stored in a memory provided in the sensor apparatus 110-k and executed by a processor provided in the sensor apparatus 110-k, whereas in another example the support portion 115-k is implemented by a dedicated electric circuit, e.g. as a FPGA or as an ASIC provided as part of the sensor apparatus 110-k. In various examples, the support portion 115-k may be considered as an embedded computer having a relatively low processing power that is sufficient for monitoring reception of substitute requests from other sensor apparatuses and for derivation of the substitute sensor indications. In an example, the support portion 115-k is implemented separately from the control portion 113-k and the supervising portion 114-k, whereas in another example the program code stored in the memory and executed by the processor or the dedicated electric circuit may provide the support portion 115-k together with the control portion 113-k and/or the supervising portion 114-k.

More detailed examples that pertain to various ways of operating the supervising portion 114-k and the support portion 115-k as part of operation of the sensor apparatus 110-k are provided in the following. In particular, various examples that pertain to operation of the supervising portion 114-k are followed by examples that pertain to operation of the support portion 115-k.

According to a first example embodiment, the sensor apparatus 110-k receives the operating power from a battery, which may be a replaceable battery or a rechargeable battery. In various examples, the battery may be provided as part of the sensor apparatus 110-k or it may be provided separately from the sensor apparatus 110-k such that is coupled to the sensor apparatus 110-k by electrical wiring to enable supply of operating power thereto. Hence, operation of the sensor apparatus 110-k according to the first example embodiment is partially dependent on the state of charge (SoC) of battery.

In the framework of the first example embodiment, the one or more predefined conditions monitored by the supervising portion 114-k include respective conditions that pertain to the SoC of the battery and the respective one or more predefined actions associated therewith pertain to adjusting operation of the control portion 113-k with respect to the schedule of deriving and/or transmitting the local sensor indications and/or to transmitting the substitute request. In various examples in this regard, the supervising portion 114-k may carry out at least one of the following in response to the SoC of the battery falling below a (first) threshold level:
- adjust the control portion 113-k to discontinue derivation and/or transmission of the local sensor indications;
- adjust the control portion 113-k to apply a relaxed schedule for deriving and/or transmitting the local sensor indications;
- operate the communication portion 111-k to transmit the substitute request to one or more other sensor apparatuses.

Herein, application of a relaxed schedule for deriving and/or transmitting the local sensor indications may involve switching from a first schedule to a second schedule, where the second schedule defines deriving and/or transmitting a smaller number of local sensor indications per time unit than the first schedule. The first schedule may be considered as a default schedule and the second schedule may be considered as a relaxed schedule. In an example, a first (default) schedule defines deriving and/or transmitting the local sensor indications at a first predefined frequency and a second (relaxed) schedule defines deriving and/or transmitting the local sensor indications at a second predefined frequency, where the second frequency is lower than the first frequency. In another example the first (default) schedule defines deriving and transmitting local sensor indications in response to the electrical measurement signal indicating one of a plurality of events, whereas the second (relaxed) schedule defines deriving and/or transmitting the local sensor indication in consideration of a limited subset of the plurality of events. In a further example, the first (default) schedule defines deriving and/or transmitting local sensor indications at a predefined frequency, whereas the second (relaxed) schedule defines deriving and/or transmitting the local sensor indications only in response to the electrical measurement signal indicating a change in relation to the most recently transmitted previous local sensor indication whose absolute value exceeds a predefined threshold.

Still referring to the first example embodiment, the substitute request may be one that requests a supporting sensor apparatus to derive the substitute sensor indications for replacing part of the local sensor indications or one that requests a supporting sensor apparatus to derive the substitute sensor indications for replacing all local sensor indications. As an example of replacing part of the local sensor indications, the substitute request may request the supporting sensor apparatus to replace those local sensor indications that are not derived at the requesting sensor apparatus 110-k due to relaxed schedule adopted therein, whereas in another example the substitute request may request the supporting sensor apparatus to apply a relaxed schedule in deriving the substitute sensor indications in a scenario where the requesting sensors apparatus 110-k discontinues derivation and/or transmission of the local sensor indications. The substitute request transmitted from the sensor apparatus 110-k may also serve as an indication of the need to replace or recharge the battery that supplies the operating power to the sensor apparatus 110-k.

In the framework of the first example embodiment, the (first) threshold level for the SoC of the battery may be set to a predefined value, e.g. to one that is within a range from 5 % to 30 %. The most appropriate value for the (first) threshold level may depend, for example, on the environmental characteristic monitored by the sensing element 112-k, on characteristics of the one or more spaces or areas illuminated by the lighting system 100 and/or on desired sensitivity of triggering the one or more predefined actions.

In a first example within the framework of the first example embodiment, the supervising portion 114-k carries out the following in response to the SoC of the battery falling below the (first) threshold level:
- adjust the control portion 113-k to discontinue derivation and transmission of the local sensor indications, and
- operate the communication portion 111-k to transmit the substitute request as one that requests the one or more other sensor apparatuses to derive the substitute sensor indications to replace the local sensor indications.

In a second example within the framework of the first example embodiment, the supervising portion 114-k carries out the following in response to the SoC of the battery falling below the (first) threshold level:
- adjust the control portion 113-k to apply a relaxed schedule for derivation and/or transmission of the local sensor indications, and
- operate the communication portion 111-k to transmit the substitute request as one that requests the one or more other sensor apparatuses to derive the substitute sensor indications to replace part of the local sensor indications.

The substitute request of the first example may serve as a request to replace all local sensor indications that would be in normal circumstances (e.g. when the SoC of the battery is above the (first) threshold level) derived at the sensor apparatus 110-k, whereas the substitute request of the second example may serve as a request to replace those local sensor indications that will not be transmitted from the sensor apparatus 110-k due to adopting the relaxed schedule for their derivation and/or transmission. Along the lines described in the foregoing, the substitute request may identify those local sensor indications that are to be replaced by the substitute sensor indications derived at the supporting sensor apparatus.

A third example within the framework of the first example embodiment complements the first example or the second example with the supervising portion 114-k further monitoring another condition that pertains to the SoC of the battery together with a respective predefined actions associated therewith. In particular, in the third example the supervising portion 114-k further transmits, in response to the SoC of the battery falling below a second threshold level, a preparation request to a supporting sensor apparatus. The preparation request serves as a request for a supporting sensor apparatus to prepare for derivation of the substitute sensor indications to replace at least part of the local sensor indications. Reception of the preparation request at a supporting sensor apparatus may cause the supporting sensor apparatus to initiate one or more preparatory actions that facilitate derivation of the substitute sensor indications therein in case the preparation request is followed by the substitute request. Examples of such preparatory actions are provided later in this text.

Like the substitute request described in the foregoing, also the preparation request may pertain to replacing all local sensor indications that would be otherwise transmitted from the sensor apparatus 110-k or to replacing those local sensor indications that will not be transmitted from the sensor apparatus 110-k due to adopting the relaxed schedule for their derivation and/or transmission, where the preparation request includes an identification of the sensor apparatus 110-k to identify its origin and where the preparation request may identify those local sensor indications that are to be replaced by the substitute sensor indications derived at the supporting sensor apparatus.

The second threshold level for the SoC of the battery applied in the third example is higher than the (first) threshold level described above. The second threshold level may be set to a predefined value, e.g. to one that is within a range from 10 % to 40 %. The most appropriate value for the second threshold level may depend, for example, on the value chosen for the (first) threshold level, on the environmental characteristic monitored by the sensing element 112-k, on characteristics of the one or more spaces or areas illuminated by the lighting system 100 and/or on desired sensitivity of triggering the one or more preparatory actions at a supporting sensor apparatus in advance of the (possibly) upcoming substitute request.

According to a second example embodiment, the one or more predefined conditions monitored by the supervising portion 114-k include respective conditions that pertain to the local sensor indications derived via operation of the control portion 113-k based on the electrical measurement signal received from the sensing element 112-k and the respective one or more predefined actions associated therewith pertain to adjusting operation of the control portion 113-k with respect to the schedule of deriving and/or transmitting the local sensor indications and/or to transmitting the substitute request. In various examples in this regard, the supervising portion 114-k may carry out at least one of the following in response to detecting local sensor indications that represent compromised values for the first environmental characteristic:
- adjust the control portion 113-k to discontinue derivation and/or transmission of the local sensor indications,
- operate the communication portion 111-k to transmit the substitute request to one or more other sensor apparatuses.

In a first example within the framework of the second example embodiment, the supervising portion 114-k responds to detection of compromised values for the first environmental characteristic via adjusting the control portion 113-k both to discontinue derivation of the local sensor indications and to discontinue transmission of the derived local sensor indications in order to avoid unnecessary processing at the sensor apparatus 110-k. In a second example within the framework of the second example embodiment, the control portion 113-k continues derivation of the local sensor indications despite the supervising portion 114-k detecting the compromised values, whereas the control portion 113-k is adjusted to discontinue transmission of the derived local sensor indications. This avoids generating unnecessary traffic to the lighting control network by transmitting sensor indications that are found to represent compromised values for the first environmental characteristic, while the derived local sensor indications may be subsequently applied for analysis purposes and/or for detecting a reoccurrence of non-compromised values after a period of compromised values.

In the framework of the second example embodiment, the supervising portion 114-k may apply one or more criteria for detecting local sensor indications that represent compromised values for the first environmental characteristic, where in non-limiting examples the one or more criteria may be applied to detect local sensor indications of one of the following kind:
- local sensor indications that represent values that are outside one or more predefined value ranges the represent applicable values for the first environmental characteristic;
- local sensor indications that represent values that are within one or more predefined value ranges that represent non-applicable values for the first environmental characteristics;
- local sensor indications that represent values of the first environmental characteristic that remain identical over a time period that exceeds a predefined duration;
- local sensor indications that represent values of the first environmental characteristic that do not match those represented by remote sensor indications received from one or more other sensor apparatuses;
- local sensor indications that represent values of the first environmental characteristic that do not match those represented by local sensor indications derived in the past.

In the framework of the second example embodiment, the substitute request transmitted from the sensor apparatus 110-k is one that requests replacing all local sensor indications that would be in normal circumstances (e.g. when no local sensor indications that represent compromised values for the first environmental characteristic are detected) derived at the sensor apparatus 110-k.

According to a third example embodiment, the one or more predefined conditions monitored by the supervising portion 114-k include respective conditions that pertain to location of the sensor apparatus 110-k and the respective one or more predefined actions associated therewith pertain to adjusting operation of the control portion 113-k with respect to the schedule of deriving and/or transmitting the local sensor indications and/or to transmitting the substitute request. In various examples in this regard, the supervising portion 114-k may carry out at least one of the following in response to detecting a change of location of the sensor apparatus 110-k:
- adjust the control portion 113-k to discontinue derivation and/or transmission of the local sensor indications;
- operate the communication portion 111-k to transmit the substitute request to one or more other sensor apparatuses.

The first and second examples with respect to adjusting the operation of the control portion 113-k in terms of deriving and transmitting the local sensor indications described in the foregoing for the second example embodiment are applicable in the third example embodiment as well, *mutatis mutandis.* In the framework of the third example embodiment, the substitute request transmitted from the sensor apparatus 110-k is one that requests replacing all local sensor indications that would be in normal circumstances (e.g. when no change of location is detected) derived at the sensor apparatus 110-k.

In an example where the lighting control network is provided as a wireless communication network, the supervising portion 114-k may detect a change of location of the sensor apparatus 110-k based on one or more changes in messages received at the sensor apparatus 110-k via the communication portion 111-k. In this regard, the supervising portion 114-k may detect a change of location e.g. via detecting one of the following scenarios:
- lack of reception of messages from one or more other nodes of the lighting control network from which messages have been received in the past;
- reception of messages from one or more other nodes of the lighting control network from which no messages have been received in the past;
- messages received from one or more other nodes of the lighting control network at respective signal strengths that are substantially lower than those observed in the past;
- messages received from one or more other nodes of the lighting control network at respective signal strengths that are substantially higher than those observed in the past.

Herein, the messages under consideration may be any messages transmitted over the lighting control network by other nodes of the lighting control network, e.g. ones that convey the sensor indications derived at and transmitted from other ones of the plurality of sensor apparatuses 110. In further examples, the supervising portion 114-k may detect a change of location of the sensor apparatus 110-k based on ranging techniques known in the art, e.g. the Channel Sounding functionality enabled by the BLE specifications.

In various examples within the framework of the third example embodiments, the sensor apparatus 110-k may be any mobile sensor apparatus that may be operated in various locations within the one or more spaces or areas illuminated by the lighting system 100 but that is configured for a specific task in a certain location within one or more spaces or areas. Typically, but not necessarily, such a mobile sensor apparatus is battery-powered and/or it applies wireless communication for communication over the lighting control network. As a specific example, the sensor apparatus 110-k may be a 'chair sensor' arranged to monitor an occupancy of a chair, whereas relocation of the chair from a certain location of the one or more spaces or areas (e.g. from a certain room) illuminated by the lighting system 100 triggers the supervising portion 114-k to carry out the predefined actions associated with the detected change of location.

According to a fourth example embodiment, the one or more predefined conditions monitored by the supervising portion 114-k include respective conditions that pertain to respective remote sensor indications received from one or more other sensor apparatuses, where the remote sensor indications under consideration are ones that are descriptive of a predefined second environmental characteristic in the one or more spaces or areas illuminated by the lighting system 100. Moreover, the respective one or more predefined actions associated with the one or more conditions monitored by the supervising portion 114-k pertain to adjusting operation of the control portion 113-k with respect to the schedule of deriving and/or transmitting the local sensor indications and/or to transmitting the substitute request. In various examples in this regard, the supervising portion 114-k may carry out at least one of the following in response to receiving, from a particular other sensor apparatus, remote sensor indications that represent values of the second environmental characteristic that are outside one or more value ranges that represent applicable operating conditions for the sensing element 112k:
- adjust the control portion 113-k to discontinue derivation and/or transmission of the local sensor indications;
- operate the communication portion 111-k to transmit the substitute request to one or more other sensor apparatuses.

The first and second examples with respect to adjusting the operation of the control portion 113-k in terms of deriving and transmitting the local sensor indications described in the foregoing for the second example embodiment are applicable in the fourth example embodiment as well, *mutatis mutandis.* In the framework of the fourth example embodiment, the substitute request transmitted from the sensor apparatus 110-k is one that requests replacing all local sensor indications that would be in normal circumstances (e.g. when the remote sensor indications indicate the second environmental characteristic to be within the one or more value ranges that represent applicable operating conditions for the sensing element 112-k) derived at the sensor apparatus 110-k.

As an example of applicable first and second environmental characteristics in the framework of the fourth example embodiment, the first environmental characteristic may be occupancy determined via a PIR sensor and the second environmental characteristic may be temperature, whereas the applicable operating conditions for the PIR may be temperatures that are below a predefined temperature threshold. As another example in this regard, the first environmental characteristic may be occupancy determined based on one or more sound parameters derived based on a sound signal captured by a microphone and the second environmental characteristic may be sound pressure level (SPL) in the space, whereas the applicable operating conditions for the sound-parameter-based occupancy detection may be SPLs that are below a predefined SPL threshold. As a further example in this regard, the first environmental characteristic may be occupancy determined based on video images and the second environmental characteristic may be light level, whereas the applicable operating conditions for the video-based occupancy detection may involve light levels that are above a predefine light level threshold. In each of these exemplifying scenarios, an applicable supporting sensor apparatus may be one that applies different sensing technology for occupancy detection.

Various examples described in the forgoing in context of the first, second, third and fourth example embodiments involve the possibility for the sensor apparatus 110-k transmitting the substitute request via operation of the supervising portion 114-k therein, where the substitute request is addressed to one or more other sensor apparatuses of the lighting system 100 that are applicable for serving as a supporting sensor apparatus for the sensor apparatus 110-k. Conversely, the sensor apparatus 110-k may receive the substitute request from another sensor apparatus of the lighting system 100, whereas the sensor apparatus 110-k may respond to the substitute request via operation of the support portion 115-k that involves deriving the substitute sensor indications according to the received substitute request and by operating the communication portion 111-k to transmit the derived substitute sensor indications over the lighting control network to one or more other apparatuses of the lighting system 100. In other words, the operation of the support portion 115-k in response to receiving the substitute request results in the sensor apparatus 110-k operating as a supporting sensor apparatus.

The support portion 115-k responds to reception of the substitute request received from a requesting sensor apparatus by starting derivation of the substitute sensor indications in consideration of a predefined relationship between the local sensor indications and the remote sensor indications to be derived at the requesting sensor apparatus.

In a first example, the predefined relationship between the local sensor indications derived at the sensor apparatus 110-k and the remote sensor indications to be derived at the requesting sensor apparatus is a direct one-to-one mapping and, consequently, the support portion 115-k applies the local sensor indications derived at the sensor apparatus 110-k as the substitute sensor indications. This approach is applicable e.g. when both the local sensor indications and the remote sensor indications are descriptive of the first environmental characteristics and when the sensor apparatus 110-k and requesting sensor apparatus are monitoring respective locations of the one or more spaces or areas that are relatively close to each other.

In a second example, the predefined relationship between the local sensor indications derived at the sensor apparatus 110-k and the remote sensor indications to be derived at the requesting sensor apparatus is defined via a predefined mapping function that is applicable for converting the local sensor indications derived at the sensor apparatus 110-k into corresponding substitute sensor indications in consideration of the known dependence between the local sensor indications and the remote sensor indications. This approach is applicable, for example, in a scenario where both the local sensor indications and the remote sensor indications are descriptive of the first environmental characteristics but the sensor apparatus 110-k and the requesting sensor apparatus are monitoring respective locations of the one or more spaces or areas that are relatively close to each other or in a scenario where the remote sensor indications are descriptive of an environmental characteristic different from the first environmental characteristic.

According to an example, as described in the foregoing for the first example embodiment, the substitute request may be preceded by the preparation request that serves as an 'advance warning' of an upcoming substitute request from the requesting sensor apparatus e.g. due to the SoC of the battery falling below the respective threshold levels and the support portion 115-k invoking preparatory actions in response to the preparation request. In particular, the support portion 115-k may be arranged to:
- receive the preparation request in advance of the substitute request, the preparation request serving as an indication to prepare for derivation of the substitute sensor indications, and
- carry out a learning procedure, based on a history of local sensor indications and a history of remote sensor indications received from the requesting sensor apparatus, to determine the relationship between the local sensor indications derived at the sensor apparatus 110-k and the remote sensor indications.

In this regard, the support portion 115-k stores the past values of the local sensor indications derived at the sensor apparatus 110-k (i.e. the history of local sensor indications) as well as past values the remote sensor values received from the requesting sensor apparatus (i.e. the history of remote sensor indications) in a memory provided at the sensor apparatus 110-k. The learning procedure may involve determination of the mapping function for subsequent use upon reception of the substitute request. The learning procedure may be carried out using techniques known in the art, e.g. via application of a regression analysis technique or via application of a machine learning technique.

According to an example, the support portion 115-k acknowledges reception of the substitute request via operating the communication portion 111-k to transmit an acknowledgement message that includes an identification of the sensor apparatus 110-k. The acknowledgement serve as a confirmation to the requesting sensor apparatus that the sensor apparatus 110-k has adopted the role of the supporting sensor apparatus for the requesting sensor apparatus. Moreover, the acknowledgment message further serves as an indication to other elements of the lighting system 100, e.g. to the lighting control entity 130 and/or to the plurality of luminaries 120 (as applicable), with regard to the sensor apparatus 110-k providing the substitute sensor indications that are to be used as replacement to the sensor indications normally provided by the requesting sensor apparatus.

After having detected an occurrence of one of one or more predefined conditions that are associated with respective aspects of compromised operation of the sensor apparatus 110-k and having taken the one or more predefined actions associated with the respective condition, the supervising portion 114-k may detect that the respective condition no longer pertains e.g. due to a corrective action taken by maintenance personnel or due to another reason. In various examples, depending on the actions taken in response to the detected condition, the supervising portion 114-k may respond to detecting recovery from the compromised operation by restoring derivation and/or transmission of the local sensor indications according to normal (or default) manner and/or transmitting a termination request to the supporting sensor apparatus to request the supporting sensor apparatus to discontinue derivation and transmission of the substitute sensor indications. The termination request may also serve as an indication to other elements of the lighting system 100, e.g. to the lighting control entity 130 and/or to the plurality of luminaries 120 (as applicable), with respect to the sensor apparatus 110-k restoring its normal operation in terms of transmitting the sensor indications derived therein.

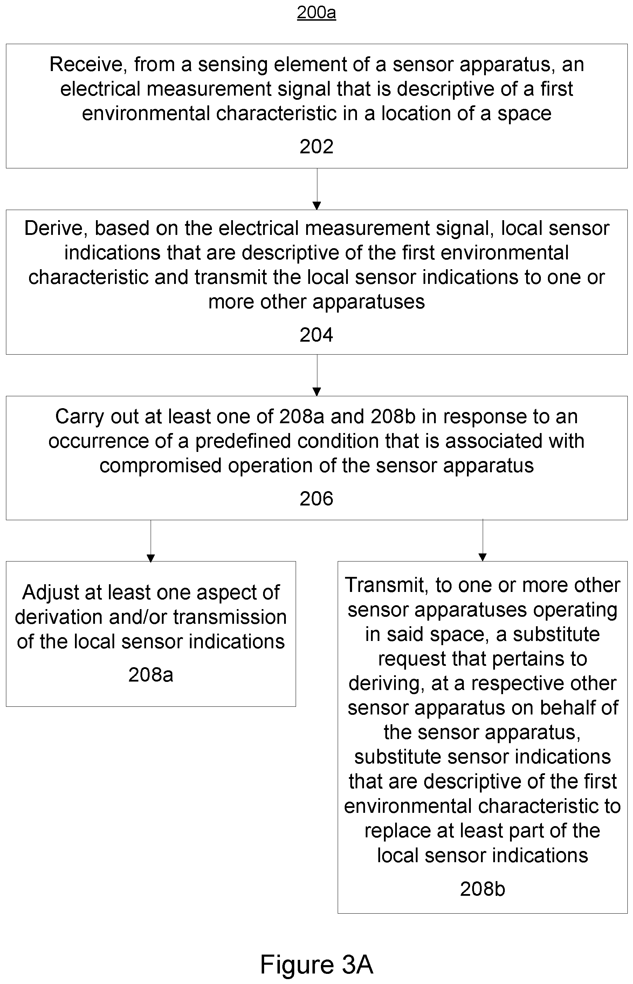

The operations carried out via joint operation of the control portion 113-k and the supervising portion 114-k may also be described as steps of a method. As an example in this regard, Figure 3A illustrates a method 200a to be carried out in the measurement apparatus 110-k, where the method 200a includes the following steps:
- receiving, from the sensing element 112-k, an electrical measurement signal that is descriptive of a first environmental characteristic in a location of a space (block 202);
- deriving, based on the electrical measurement signal, local sensor indications that are descriptive of the first environmental characteristic and transmitting the local sensor indications to one or more other apparatuses (block 204); and
- carrying out at least one of the following in response to an occurrence of a predefined condition that is associated with compromised operation of the sensor apparatus (block 206):
   ∘ adjusting at least one aspect of derivation and/or transmission of the local sensor indications (block 208a),
   ∘ transmit, to one or more other sensor apparatuses operating in said space, a substitute request that pertains to deriving, at a respective other sensor apparatus on behalf of the sensor apparatus 110-k, substitute sensor indications that are descriptive of the first environmental characteristic to replace at least part of the local sensor indications (block 208b).

The method 200a may be implemented and/or varied in a number of ways, for example in accordance with the above-described examples that pertain to the respective operation of the control portion 113-k and supervising portion 114-k of the sensor apparatus 110-k.

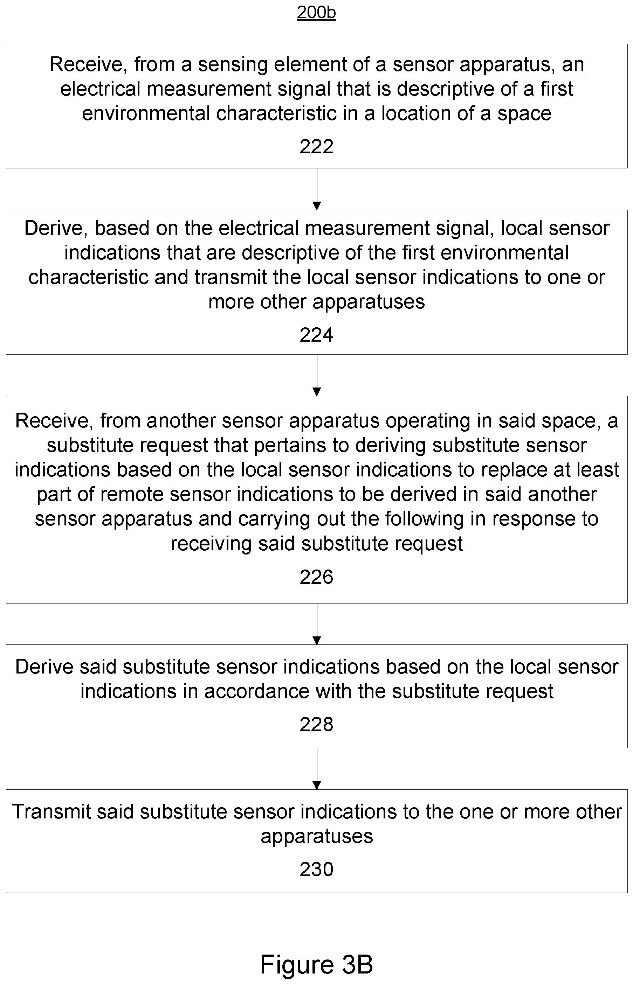

The operations carried out via joint operation of the control portion 113-k and the support portion 115-k may also be described as steps of a method. As an example in this regard, Figure 3B illustrates a method 200b to be carried out in the measurement apparatus 110-k, where the method 200b includes the following steps:
- receiving, from the sensing element 112-k, an electrical measurement signal that is descriptive of the first environmental characteristic in a location of a space (block 222);
- deriving, based on the electrical measurement signal, local sensor indications that are descriptive of the first environmental characteristic and transmitting the local sensor indications to one or more other apparatuses (block 224); and
- receiving, from another sensor apparatus operating in said space, a substitute request that pertains to deriving substitute sensor indications based on the local sensor indications to replace at least part of remote sensor indications to be derived in said another sensor apparatus and carrying out the following in response to receiving said substitute request (block 226):
   ∘ deriving said substitute sensor indications based on the local sensor indications in accordance with the substitute request (block 228), and
   ∘ transmitting said substitute sensor indications to the one or more other apparatuses (block 230).

The method 200b may be implemented and/or varied in a number of ways, for example in accordance with the above-described examples that pertain to the respective operation of the control portion 113-k and support portion 115-k of the sensor apparatus 110-k.

Figure 4 illustrates a block diagram of some components of an apparatus 300 that may be employed to implement operations described in the foregoing with references to the control portion 113-k, the supervising portion 114-k and/or the support portion 115-k. The apparatus 300 comprises a processor 310 and a memory 320. The memory 320 may store data and computer program code 325. The apparatus 300 may further comprise communication means 330 for wired and/or wireless communication with other apparatuses and/or user I/O (input/output) components 340 that may be arranged, together with the processor 310 and a portion of the computer program code 325, to provide the user interface for receiving input from a user and/or providing output to the user. The user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the control portion 113-k, the supervising portion 114-k and/or the support portion 115-k. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the control portion 113-k, the supervising portion 114-k and/or the support portion 115-k. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the control portion 113-k, the supervising portion 114-k and/or the support portion 115-k. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the control portion 113-k, the supervising portion 114-k and/or the support portion 115-k.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the control portion 113-k, the supervising portion 114-k and/or the support portion 115-k. The computer-readable non-transitory medium may comprise a memory device, a record medium or another article of manufacture that tangibly embodies the computer program. As another example, the computer program may be provided as a signal configured to reliably transfer the computer program.

Reference(s) to a processor herein should be construed broadly, encompassing both programmable processors and dedicated circuits such FPGAs, ASICs, etc.

## Claims

1. A sensor apparatus (110-k) for monitoring a predefined first environmental characteristics in a location of a space, the sensor apparatus (110-k) comprising:
a communication portion (111-k) for wired and/or wireless communication with one or more other apparatuses;
a sensing element (112-k) arranged to generate an electrical measurement signal that is descriptive of the first environmental characteristic;
a control portion (113-k) arranged to derive, based on the electrical measurement signal, local sensor indications that are descriptive of the first environmental characteristic and operate the communication portion (111-k) to transmit the local sensor indications to the one or more other apparatuses; and
a supervising portion (114-k) arranged to respond to an occurrence of a predefined condition that is associated with compromised operation of the sensor apparatus (110-k) by carrying out at least one of the following:
adjust at least one aspect of operation of the control portion (113-k) in relation the deriving and/or transmitting the local sensor indications, or
operate the communication portion (111-k) to transmit, to one or more other sensor apparatuses operating in said space, a substitute request that pertains to deriving, at a respective other sensor apparatus on behalf of the sensor apparatus (110-k), substitute sensor indications that are descriptive of the first environmental characteristic to replace at least part of the local sensor indications.

2. A sensor apparatus (110-k) according to claim 1, wherein the sensor apparatus (110-k) is arranged to receive its operating power from a battery and wherein the supervising portion (114-k) is arranged to carry out at least one of the following in response to a state of charge of the battery falling below a predefined first threshold level:
adjust the control portion (113-k) to discontinue or apply a relaxed schedule for derivation and/or transmission of the local sensor indications;
operate the communication portion (111-k) to transmit said substitute request to said one or more other sensor apparatuses.

3. A sensor apparatus (110-k) according to claim 2, wherein the supervising portion (114-k) is arranged to carry out the following in response to the state of charge of the battery falling below the first threshold level:
adjust the control portion (113-k) to discontinue derivation and transmission of the local sensor indications; and
operate the communication portion (111-k) to transmit said substitute request as one that requests said one or more other sensor apparatuses to derive said substitute sensor indications to replace the local sensor indications.

4. A sensor apparatus (110-k) according to claim 2, wherein the supervising portion (114-k) is arranged to carry out the following in response to the state of charge of the battery falling below the first threshold level:
adjust the control portion (113-k) to apply a relaxed schedule for derivation and/or transmission of the local sensor indications; and
operate the communication portion (111-k) to transmit said substitute request as one that requests said one or more other sensor apparatuses to derive said substitute sensor indications to replace part of the local sensor indications.

5. A sensor apparatus (110-k) according to claim 3 or 4, wherein the supervising portion (114-k) is arranged to operate the communication portion (111-k) to transmit, to said one or more other sensor apparatuses, in response to the state of charge of the battery falling below a predefined second threshold level that is higher than the first threshold level, a preparation request to prepare for derivation of said substitute sensor indications to replace at least part of the local sensor indications.

6. A sensor apparatus (110-k) according to claim 1, wherein the supervising portion (114-k) is arranged to monitor the local sensor indications derived by the control portion (113-k) and to carry out at least one of the following in response to detecting local sensor indications that represent compromised values for the first environmental characteristic:
adjust the control portion (113-k) to discontinue derivation and/or transmission of the local sensor indications;
operate the communication portion (111-k) to transmit said substitute request to said one or more other sensor apparatuses.

7. A sensor apparatus (110-k) according to claim 6, wherein the local sensor indications that represent compromised values for the first environmental characteristic comprise one of the following:
local sensor indications that represent values that are outside one or more predefined value ranges the represent applicable values for the first environmental characteristic;
local sensor indications that represent values that are within one or more predefined value ranges that represent non-applicable values for the first environmental characteristics;
local sensor indications that represent values of the first environmental characteristic that remain identical over a time period that exceeds a predefined duration;
local sensor indications that represent values of the first environmental characteristic that do not match those represented by remote sensor indications received from one or more other sensor apparatuses;
local sensor indications that represent values of the first environmental characteristics that do not match those represented by local sensor indications derived in the past.

8. A sensor apparatus (110-k) according to claim 1, wherein the wherein the supervising portion (114-k) is arranged to monitor remote sensor indications received from a particular another sensor apparatus, where the remote sensor indications are descriptive of a predefined second environmental characteristic in said space and to carry out at least one of the following in response to receiving remote sensor indications that represent values of the second environmental characteristic that are outside one or more predefined value ranges that represent applicable operating conditions for the sensing element (112-k):
adjust the control portion (113-k) to discontinue derivation and/or transmission of the local sensor indications; and
operate the communication portion (111-k) to transmit said request to said one or more other sensor apparatuses.

9. A sensor apparatus (110-k) according to claim 1, wherein the supervising portion (114-k) is arranged to detect a change in location of the sensor apparatus (110-k) and to carry out at least one of the following in response to detecting the change in location:
adjust the control portion (113-k) to discontinue or apply a relaxed schedule for derivation and/or transmission of the local sensor indications;
operate the communication portion (111-k) to transmit said substitute request to said one or more other sensor apparatuses.

10. A sensor apparatus according to any of claims 1 to 9, wherein the substitute request comprises information that identifies the local sensor indications to be replaced by another sensor apparatus.

11. A sensor apparatus (110-k) for monitoring a predefined first environmental characteristics in a location of a space, the sensor apparatus (110-k) comprising:
a communication portion (111-k) for wired and/or wireless communication with one or more other apparatuses;
a sensing element (112-k) arranged to generate an electrical measurement signal that is descriptive of the first environmental characteristic;
a control portion (113-k) arranged to derive, based on the measurement signal, local sensor indications that are descriptive of the first environmental characteristic and operate the communication portion (111-k) to transmit the local sensor indications to the one or more other apparatuses; and
a support portion (115-k) arranged to:
receive, from another sensor apparatus operating in said space, a substitute request that pertains to deriving substitute sensor indications based on the local sensor indications to replace at least part of remote sensor indications to be derived in said another sensor apparatus,
derive said substitute sensor indications based on the local sensor indications in accordance with the substitute request, and
operate the communication portion (111-k) to transmit said substitute sensor indications to the one or more other apparatuses.

12. A sensor apparatus (110-k) according to claim 11, wherein
the support portion (115-k) is arranged to respond to the substitute request by starting derivation of said substitute sensor indications based on the local sensor indications in consideration of a predefined relationship between the local sensor indications derived at the sensor apparatus (110-k) and the remote sensor indications to be derived at said another sensor apparatus.

13. A sensor apparatus (110-k) according to claim 12, wherein the support portion (115-k) is further arranged to
receive a preparation request in advance of the substitute request, the preparation request serving as an indication to prepare for derivation of the substitute sensor indications, and
carry out a learning procedure, based on a history of local sensor indications and a history of remote sensor indications received from said another sensor apparatus, to determine said relationship between the local sensor indications derived at the sensor apparatus (110-k) and the remote sensor indications.

14. A method (200a) for monitoring, by a sensor apparatus (110-k), a predefined first environmental characteristics in a location of a space, the method (200a) comprising:
receiving (202), from a sensing element (112-k) of the sensor apparatus (110-k), an electrical measurement signal that is descriptive of the first environmental characteristic;
deriving (204), based on the electrical measurement signal, local sensor indications that are descriptive of the first environmental characteristic and transmitting the local sensor indications to one or more other apparatuses; and
carrying out (206) at least one of the following in response to an occurrence of a predefined condition that is associated with compromised operation of the sensor apparatus (110-k):
adjusting (208a) at least one aspect of deriving and/or transmitting the local sensor indications, or
transmitting (208b), to one or more other sensor apparatuses operating in said space, a substitute request that pertains to deriving, at a respective other sensor apparatus on behalf of the sensor apparatus (110-k), substitute sensor indications that are descriptive of the first environmental characteristic to replace at least part of the local sensor indications.

15. A method (200b) for monitoring, by a sensor apparatus (110-k), a predefined first environmental characteristics in a location of a space, the method (200b) comprising:
receiving (222), from a sensing element (112-k) of the sensor apparatus (110-k), an electrical measurement signal that is descriptive of the first environmental characteristic;
deriving (224), based on the electrical measurement signal, local sensor indications that are descriptive of the first environmental characteristic and transmit the local sensor indications to one or more other apparatuses; and
receiving (226), from another sensor apparatus operating in said space, a substitute request that pertains to deriving substitute sensor indications based on the local sensor indications to replace at least part of remote sensor indications to be derived in said another sensor apparatus and carrying out the following in response to receiving said substitute request:
deriving (228) said substitute sensor indications based on the local sensor indications in accordance with the substitute request, and
transmitting (230) said substitute sensor indications to the one or more other apparatuses.
